(19) Europäisches Patentamt
European Patent Office
Office européen des brevets

(11) EP 3 617 774 A1

(12) EUROPEAN PATENT APPLICATION
published in accordance with Art. 153(4) EPC

(43) Date of publication:
04.03.2020 Bulletin 2020/10

(51) Int Cl.:
G02B 27/22 (2018.01)      G02B 27/01 (2006.01)
G03B 35/24 (2006.01)      G09F 9/00 (2006.01)
H04N 5/64 (2006.01)

(21) Application number: 18791699.4

(22) Date of filing: 25.04.2018

(86) International application number:
PCT/JP2018/016860

(87) International publication number:
WO 2018/199183 (01.11.2018 Gazette 2018/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.04.2017 JP 2017087699

(71) Applicant: Kyocera Corporation
Kyoto-shi
Kyoto 612-8501 (JP)

(72) Inventor: KUSAFUKA Kaoru
Kyoto-shi
Kyoto 612-8501 (JP)

(74) Representative: Viering, Jentschura & Partner
mbB
Patent- und Rechtsanwälte
Am Brauhaus 8
01099 Dresden (DE)

(54) THREE-DIMENSIONAL DISPLAY DEVICE, THREE-DIMENSIONAL DISPLAY SYSTEM, HEAD-UP DISPLAY SYSTEM, AND MOBILE BODY

(57) A three-dimensional display apparatus 3 includes a display surface 51, an optical element, and a controller 7. The display surface 51 is formed as a curved surface that does not have curvature in a first direction and has curvature in a plane orthogonal to the first direction. The display surface 51 includes subpixels arranged in a grid pattern along the first direction and a direction, which is orthogonal to the first direction, in the display surface. The optical element is arranged to follow the curved surface and defines a beam direction of optical light emitted from the subpixels for each of strip-shaped regions extending in a certain direction in a surface following the curved surface. The controller 7 is configured to acquire a position of a user's eye and change an image displayed by each of subpixels based on the display surface, the optical element, and the position of the user's eye.

FIG. 1

## Description

CROSS REFERENCE TO RELATED APPLICATION

This application claims priority to and the benefit of Japanese Patent Application No. 2017-087699 filed on April 26, 2017, the entire contents of which are incorporated herein by reference.

TECHNICAL FIELD

The present disclosure relates to a three-dimensional display apparatus, a three-dimensional display system, a head-up display system, and a mobile body.

BACKGROUND

Conventionally, three-dimensional display apparatuses that display three-dimensional images without the need for a viewer to wear eyeglasses are known. Such a three-dimensional display includes an optical element configured to transmit a portion of image light emitted from an image display panel to a right eye and another portion of image light emitted from the image display panel to a left eye. Generally, subpixels of the image display panel have a rectangular shape and are arranged in horizontal and vertical directions. In order to control image light that reaches the right and left eyes, a parallax barrier having strip-like openings extending in the vertical direction is customarily used as the optical element. However, when the parallax barrier extending in the vertical direction is arranged in the horizontal direction, problems are encountered, such as the occurrence of a moiré pattern that obscures the image. As such, PTL 1 set forth below suggests a three-dimensional display apparatus that includes an optical element in which strip-shaped parallax barriers extending in a diagonal direction of subpixels of a display surface are arranged.

CITATION LIST

Patent Literature

PTL 1: JP-A-2001-166259

SUMMARY

(Technical Problem)

It is desirable to apply three-dimensional display apparatuses as described above to curved display panels, which are in increasing demand due to design requirements.

The present disclosure provides a three-dimensional display apparatus, a three-dimensional display system, a head-up display system, and a mobile body that satisfy the design requirements of a curved display panel and are capable of appropriately performing a three-dimensional display by suppressing the occurrence of a moiré pattern.

(Solution to Problem)

A three-dimensional display apparatus according to the present disclosure includes a display surface, an optical element, and a controller. The display surface is formed as a curved surface that does not have curvature in a first direction and has curvature in a plane orthogonal to the first direction. The display surface includes subpixels arranged in a grid pattern along the first direction and a direction in the display surface that is orthogonal to the first direction. The optical element is arranged to follow the curved surface and defines a beam direction of image light emitted from each of the subpixels for each of strip-shaped regions extending in a certain direction in a surface following the curved surface. The controller is configured to acquire a position of a user's eye and change an image displayed by each of subpixels based on the display surface, the optical element, and the position of the user's eye.

A three-dimensional display system according to the present disclosure includes a detection apparatus and three-dimensional display apparatus. The detection apparatus is configured to detect a position of a user's eye. The three-dimensional display apparatus includes a display surface, an optical element, and a controller. The display surface is formed as a curved surface that does not have curvature in a first direction and has curvature in a plane orthogonal to the first direction. The display surface includes subpixels arranged in a grid pattern along the first direction and a direction in the display surface that is orthogonal to the first direction. The optical element is arranged to follow the curved surface and defines a beam direction of image light emitted from each of the subpixels for each of strip-shaped regions extending in a certain direction in a surface following the curved surface. The controller is configured to acquire the position of the user's eye and change an image displayed by each of subpixels based on the display surface, the optical element, and the position of the user's eye.

A head-up display system according to the present disclosure includes a three-dimensional display apparatus. The three-dimensional display apparatus includes a display surface, an optical element, and a controller. The display surface is formed as a curved surface that does not have curvature in a first direction and has curvature in a plane orthogonal to the first direction, and includes subpixels arranged in a grid pattern along the first direction and a direction in the display surface that is orthogonal to the first direction. The optical element is arranged to follow the curved surface and defines a beam direction of image light emitted from each of the subpixels for each of strip-shaped regions extending in a certain direction in a surface following the curved surface. The controller is configured to acquire a position of a user's eye and change an image displayed by each of subpixels based on the display surface, the optical element, and the position of the user's eye.

A mobile body according to the present disclosure includes a three-dimensional display system. The three-dimensional display system includes a detection apparatus and a three-dimensional display apparatus. The detection apparatus is configured to detect a position of a user's eye. The three-dimensional display apparatus includes a display surface, an optical element, and a controller. The display surface is formed as a curved surface that does not have curvature in a first direction and has curvature in a plane orthogonal to the first direction, and includes subpixels arranged in a grid pattern along the first direction and a direction in the display surface that is orthogonal to the first direction. The optical element is arranged to follow the curved surface and defines a beam direction of image light emitted from each of the subpixels for each of strip-shaped regions extending in a certain direction in a surface following the curved surface. The controller is configured to acquire the position of the user's eye and change an image displayed by each of subpixels based on the display surface, the optical element, and the position of the user's eye.

(Advantageous Effect)

According to embodiments of the present disclosure, three-dimensional display can be appropriately performed while accommodating the design requirements of a curved display panel formed by a curved surface.

BRIEF DESCRIPTION OF THE DRAWINGS

In the accompanying drawings:

FIG. 1 is a diagram illustrating an example of a three-dimensional display system viewed in a horizontal direction with user's eyes being located at a reference position;

FIG. 2 is a diagram illustrating a display panel and an optical element illustrated in FIG. 1 in an expanded planar state viewed from an optical element side;

FIG. 3 is a diagram illustrating an example in which the user's eyes located in the reference position and the three-dimensional display system are viewed in a vertical direction;

FIG. 4 is a diagram schematically illustrating a display surface viewed from the user's eyes located at the reference position as illustrated in FIG. 1;

FIG. 5 is a diagram illustrating an example in which the user's eyes at a position displaced from the reference position in the vertical direction and the three-dimensional display system are viewed in the horizontal direction;

FIG. 6 is a diagram schematically illustrating a display surface viewed from the user's eyes when the user's eyes are located at a position displaced from the reference position in the vertical direction as illustrated in FIG. 5;

FIG. 7 is a schematic diagram for explaining a preferred viewing distance;

FIG. 8 is a schematic diagram for explaining a visible region in the vertical direction when the user's eyes are located at the reference position as illustrated in FIG. 1;

FIG. 9 is a schematic diagram for explaining a visible region when the user's eyes are displaced in a depth direction from the reference position;

FIG 10 is a schematic configuration diagram illustrating a three-dimensional display apparatus that includes an optical element configured as a lenticular lens;

FIG 11 is a diagram illustrating an example of a HUD having the three-dimensional display system according to the present embodiments mounted therein; and

FIG 12 is a diagram illustrating an example of a mobile body having the HUD illustrated in FIG. 11 mounted therein.

DETAILED DESCRIPTION

Hereinafter, embodiments of the present disclosure will be described with reference to the drawings.

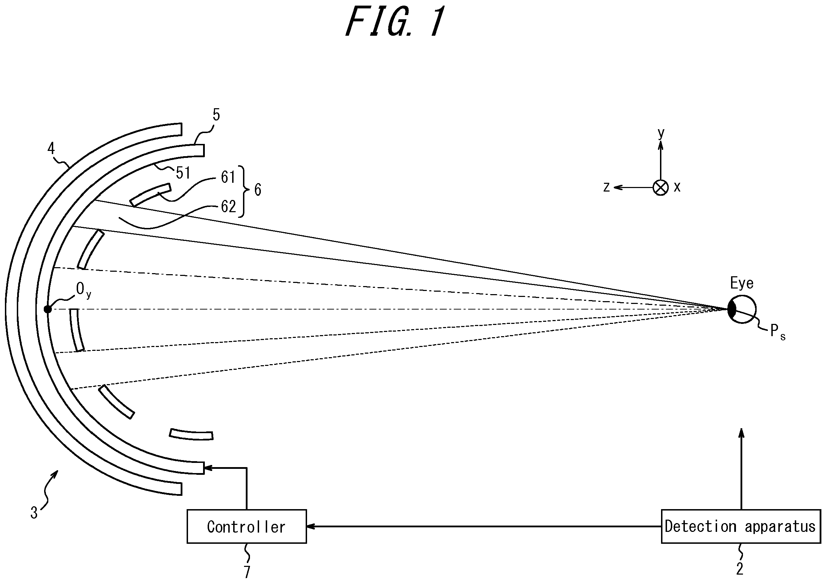

A three-dimensional display system 1 according to the embodiments of the present disclosure includes a detection apparatus 2 and a three-dimensional display apparatus 3, as illustrated in FIG. 1.

Hereinafter, a configuration of the three-dimensional display system 1 will be described in detail. The detection apparatus 2 illustrated in FIG. 1 is configured to detect a position of one of a left eye and a right eye of a user and configured to output the position to the controller 7. The detection apparatus 2 may include, for example, a camera. The detection apparatus 2 may capture an image of the user's face using the camera. The detection apparatus 2 may detect at least one of the left eye and the right eye of the user from an image captured by the camera. The detection apparatus 2 may detect the position of at least one of the left eye and the right eye of the user as coordinates in a three-dimensional space based on an image captured by one camera. The detection apparatus 2 may detect the position of at least one of the left eye and the right eye of the user as the coordinates in a three-dimensional space based on images captured by two or more cameras.

The detection apparatus 2 does not need to include a camera and can be connected to an external camera. The detection apparatus 2 may include an input terminal configured to receive a signal input from the external camera. The external camera may be directly connected to the input terminal. The external camera may be indirectly connected to the input terminal via a common network. The detection apparatus 2 which does not include a camera may include an input terminal through which the camera inputs an image signal. The detection apparatus 2 which does not include a camera may detect at least one of positions of the left eye and the right eye of the user based on the image signal input to the input terminal.

The detection apparatus 2 may include, for example, a sensor. The sensor may be an ultrasonic sensor, an optical sensor, or the like. The detection apparatus 2 may detect a position of a user's head using the sensor and detect at least one of positions of the left eye and the right eye of the user based on the position of the head. The detection apparatus 2 may detect at least one of positions of the left eye and the right eye of the user as coordinates in a three-dimensional space using one or more sensors.

The three-dimensional display system 1 does not need to include the detection apparatus 2. When the three-dimensional display system 1 does not include the detection apparatus 2, the controller 7 may include an input terminal configured to receive a signal input from an external detection apparatus. The external detection apparatus may be connected to the input terminal. The external detection apparatus may use an electrical signal or an optical signal as a transmission signal to be transmitted in respect of the input terminal. The external detection apparatus may be indirectly connected to the input terminal via a common network. The controller 7 may receive an input of position coordinates indicating at least one of a position of the left eye and a position the right eye acquired from the external detection apparatus. The controller 7 may calculate a moving distance of the left eye and the right eye along the horizontal direction based on the position coordinates.

As illustrated in FIG. 1, the three-dimensional display apparatus 3 includes an emitter 4, a display panel 5, a parallax barrier 6 serving as an optical element, and a controller 7.

The emitter 4 irradiates the surface of the display panel 5. The emitter 4 may include a light source, a light guide plate, a diffusion plate, a diffusion sheet, and the like. In the emitter 4, the light source emits light uniformed in a direction of the surface of the display panel 5 by the light guide plate, the diffusion plate, the diffusion sheet, and the like. The emitter 4 emits homogenized light towards the display panel 5.

A display surface 51 of the display panel 5 is formed as a curved surface that does not have curvature in a first direction (an x-axis direction) and has a curvature in a plane (a yz plane) orthogonal to the first direction as illustrated in FIG. 1. When a center point refers to an intersection between the display surface 51 and a perpendicular line drawn to the display surface 51 from the reference position $P_S$ of the user's eyes, a second direction (a y-axis direction) refers to a direction orthogonal to the first direction at the center point on the display surface 51. A third direction (a z-axis direction) refers to a direction that is orthogonal to the first and second directions and connects the center point of the display surface 51 and the reference position $P_S$. In the following embodiment, the first direction, the second direction, and the third direction will be referred to as the horizontal direction, the vertical direction, and the depth direction, respectively; however, this is not restrictive. In the following embodiment, the same position as the center point of the display panel 5 in the vertical direction will be referred to as a vertical reference position Oy. The vertical reference position Oy is the center of the display surface 51 in the vertical direction. The vertical reference position Oy may be a position on the display surface 51 and face the center of the parallax barrier 6 in the vertical direction.

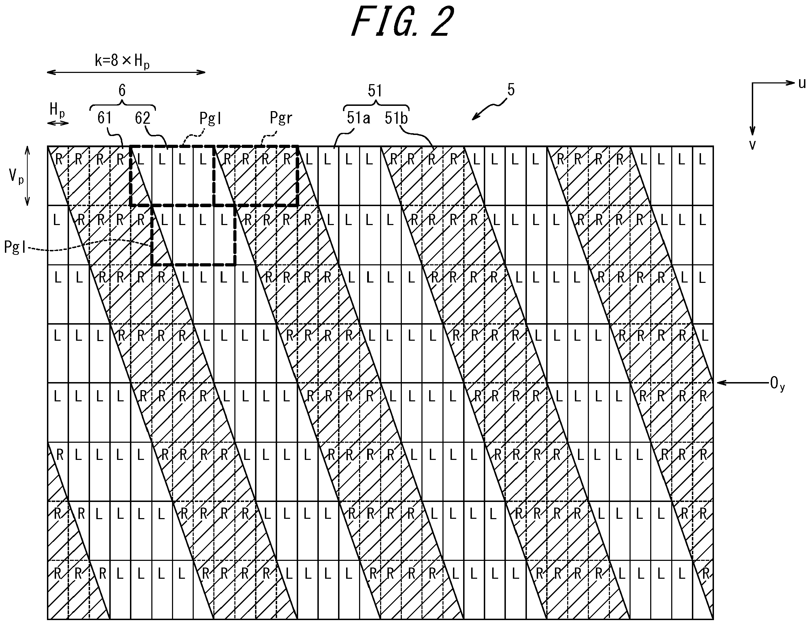

As illustrated in FIG. 2, further, a first in-surface direction (a u-axis direction) refers to a direction corresponding to the first direction within the curved surface of the display surface 51, and a second in-surface direction (a v-axis direction) refers to a direction orthogonal to the first direction. The first direction and the first in-surface direction correspond to a direction that connects the centers of the user's eyes at the time of viewing.

The display panel 5 includes the display surface 51 that includes subpixels arranged in a grid pattern along the first in-surface direction and the second in-surface direction. Although the display panel 5 is illustrated as a flat plane in FIG. 2 for convenience of explanation, the display panel 5 actually has a curved surface that is concave with respect to a user side and curved within the yz plane to form, for example, an arc.

Each subdivision of the display panel 5 corresponds to one subpixel. Subpixels is arranged in a grid pattern in the first in-surface direction and the second in-surface direction. Each of the subpixels corresponds to one of the colors R (Red), G (Green), and B (Blue). One pixel may be configured as a combination of three subpixels respectively corresponding to R, G, and B. One pixel may be referred to as one image element. The display panel 5 is not limited to a transmitting liquid crystal panel and may be another type of a display panel such as an organic EL display panel. When the display panel 5 is a self-luminous display panel, the emitter 4 may be omitted.

A parallax barrier 6 defines a beam direction of image light emitted from each of the subpixels. The parallax barrier 6 is formed by a curved surface which follows the display surface 51 and is arranged at a certain distance from the display surface 51 as illustrated in FIG. 1. The parallax barrier 6 defines the beam direction as a propagation direction of image light emitted from each of the subpixels for each of the transmitting regions 62 formed as band-like regions extending in a certain direction in the curved surface, as illustrated in FIG. 2. The certain direction has a certain angle, other than 0 degrees, with respect to the second in-surface direction. Image light emitted from the subpixels and defined by the parallax barrier 6 determines regions of the display surface 51 visible to the user's eye, i.e., visible regions 51a. The parallax barrier 6 is positioned on an opposite side of the emitter 4 across the display panel 5 as illustrated in FIG. 1. The parallax barrier 6 may be located on the same side as the emitter 4 with respect to the display panel 5.

In particular, the parallax barrier 6 includes light shielding surfaces 61 configured to block image light as illustrated in FIG. 2. Light shielding surfaces 61 define the transmitting regions 62 between the respective adjacent light shielding surfaces 61. The transmitting regions 62 have a higher light transmittance than the light shielding surfaces 61. The light shielding surfaces 61 have a lower light transmittance than the transmitting regions 62.

The transmitting regions 62 are portions configured to transmit light incident on the parallax barrier 6. The transmitting regions 62 may transmit light at a transmittance of a first certain value or more. The first certain value may be, for example, 100% or a value close thereto. The light shielding surfaces 61 are portions configured to block the light incident on the parallax barrier 6. In other words, the light shielding surfaces 61 are configured to block the image displayed on the three-dimensional display apparatus 3. The light shielding surfaces 61 may block light at a transmittance of a second certain value or less. The second certain value may be, for example may be 0% or a value close thereto.

The transmitting regions 62 and the light shielding surfaces 61 extend in a certain direction in a surface which follows the display surface 51 and are alternately arranged in a repeating manner in the direction orthogonal to the certain direction. The transmitting regions 62 are configured to define the respective beam directions of image light emitted from the subpixels.

In a case in which a line indicating an edge of the transmitting region 62 extends in the second in-surface direction, a moiré pattern may occur between an aperture pattern of the parallax barrier 6 and a pixel pattern displayed on the display panel 5. When the line indicating the edge of the transmitting region 62 extends in a certain direction having a certain angle other than 0 degrees with respect to the second in-surface direction, the moiré pattern that occurs in a displayed image can be reduced.

The parallax barrier 6 may be configured as a film or a plate-like member having a transmittance lower than the second certain value. In this case, the light shielding surfaces 61 are configured as the film or the plate-like member. The transmitting regions 62 are configured as openings formed in the film or the plate-like member. The film may be made of a resin or any appropriate material. The plate-like member may be made of a resin, a metal, or any appropriate material. The parallax barrier 6 is not limited to being configured as the film or the plate-like member and may be configured as a different type of member. The parallax barrier 6 may include a substrate having a light-shielding property or a light-shielding additive added thereto.

The parallax barrier 6 may be configured as a liquid crystal shutter. The liquid crystal shutter can control light transmittance in accordance with an applied voltage. The liquid crystal shutter may include pixels and control the light transmittance of each of the pixels. The liquid crystal shutter may form a high light-transmittance region or a low light-transmittance region in any shape. In a case in which the parallax barrier 6 is configured as a liquid crystal shutter, the transmitting regions 62 may be areas having a light transmittance of the first certain value or more. In a case in which the parallax barrier 6 is configured as a liquid crystal shutter, the light shielding surfaces 61 may be areas having a light transmittance of the second certain value or less.

When the parallax barrier 6 has the above configuration, the parallax barrier 6 causes image light emitted from some subpixels in the display surface 51 to pass through the transmitting regions 62 and reach the user's right eye. The parallax barrier 6 causes image light emitted from other subpixels to pass through the transmitting regions 62 and reach the user's left eye.

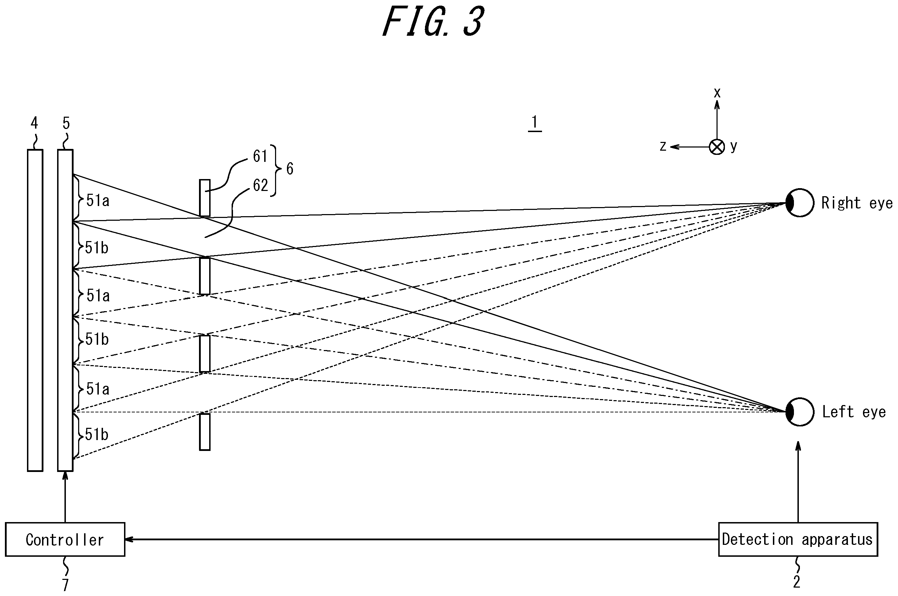

In particular, when image light transmitted through the transmitting regions 62 of the parallax barrier 6 reaches the user's left eye, the user's left eye can see the visible regions 51a corresponding to the transmitting regions 62, as illustrated in FIG. 3. Because image light is blocked by the light shielding surfaces 61 of the parallax barrier 6, the user's left eye cannot see invisible regions 51b corresponding to the light shielding surfaces 61. Thus, when the subpixels in the visible regions 51a respectively display a left-eye image and the subpixels of the invisible regions 51b respectively display a right-eye image, the user's left eye sees the left eye image alone.

Further, when image light from other subpixels transmitted through the transmitting regions 62 of the parallax barrier 6 reaches the user's right eye, the user's right eye can see the invisible regions 51b, which cannot be seen by the user's left eye. Because image light is blocked by the light shielding surfaces 61 of the parallax barrier 6, the user's right eye cannot see the visible regions 51a that can be seen by the user's left eye. Thus, when the subpixels in the visible regions 51a display the left-eye image and the subpixels in the invisible regions 51b display the right-eye image as described above, the user's right eye sees the right-eye image alone. That is, the user's left-eye sees the left-eye image alone, and the user's right eye sees the right-eye image alone. Accordingly, the user recognizes a parallax image, i.e., a stereoscopic image.

The controller 7 is connected to and is configured to control each constituent element of the three-dimensional display system 1. The constituent elements controlled by the controller 7 include the detection apparatus 2 and the display panel 5. The controller 7 is configured as, for example, a processor. The controller 7 may include one or more processors. The processor may include a general-purpose processor configured to read a particular program and performing a particular function, or a specialized processor dedicated for a particular processing. The specialized processor may include an application-specific integrated circuit (ASIC: Application Specific Integrated Circuit). The processor may include a programmable logic device (PLD: Programmable Logic Device). The PLD may include an FPGA (Field-Programmable Gate Array). The controller 7 may be configured as a SoC (System-on-a-Chip) or a SiP (System In a Package) in which one or more processors cooperate. The controller 7 may include a memory which stores various information and programs for operating each constituent element of the three-dimensional display system 1. The memory may be configured as, for example, a semiconductor memory. The memory may function as a working memory of the controller 7.

The controller 7 is configured to acquire a position of the user's eyes detected by the detection apparatus 2. The controller 7 is configured to change the image displayed by the subpixels in accordance with the position of the user's eyes. In particular, the controller 7 is configured to change the image displayed by the respective subpixels between the right-eye image and the left-eye image. Here, in order to explain a manner in which the controller 7 is configured to change the image displayed by the subpixels, the display panel 5 and the parallax barrier 6 will be first described in detail.

First, the display panel 5 and the parallax barrier 6 will be described with reference to FIG. 2 that illustrates an expanded planar state thereof. Then, a case in which the display panel 5 and the parallax barrier 6 are formed as curved surfaces will be described.

As illustrated in FIG. 2, Hp represents a length of a subpixel in the first in-surface direction displayed on the display surface 51 of the display panel 5, and Vp represents a length of a subpixel in the second in-surface direction. In this case, an absolute value of an inclination of a straight line formed by an end portion of each of the visible regions 51a, which are portions of an image that can be seen by the left eye via the transmitting region 62, is expressed by $b \times Vp / (a \times Hp)$, where each of a and b is a natural number. In the example illustrated in FIG. 2, a = 1, and b = 1. That is, the inclination of the two straight lines defining the transmitting region 62 of the display surface 51 with respect to the first in-surface direction is expressed by $1 \times Vp / (1 \times Hp)$.

On the display surface 51, the left-eye image is displayed by first subpixel groups Pg1 that include ($n \times b$) number of subpixels (hereinafter, $n \times b = m$) in which the n-number of subpixels are continuously arranged in the first in-surface direction and the b-number of subpixels are continuously arranged in the second in-surface direction. In the example illustrated in FIG. 2, the display surface 51 includes four subpixels arranged in the first in-surface direction and one subpixel arranged in the second in-surface direction that display the left-eye image in a repeating manner. Further, the display surface 51 includes a first subpixel group Pg1 having an arrangement similar to another first subpixel group Pg1 that is adjacent thereto in the second in-surface direction and displaced by one subpixel in the first in-surface direction. Each of the first subpixel groups Pg1 display the left-eye image.

The display surface 51 also includes second subpixel groups Pgr that are adjacent to the first subpixel groups Pg1 in the first in-surface direction and include the m-number of subpixels made up of the n-number of subpixels continuously arranged in the first in-surface direction and the b-number of subpixels continuously arranged in the second in-surface direction. The second subpixel groups Pgr display the right-eye image. In the display surface 51 of the example illustrated in FIG. 2, the second subpixel groups Pgr adjacent to the first subpixel groups Pg1 in the first in-surface direction include four subpixels continuously arranged in the first in-surface direction and one subpixel arranged in the second in-surface direction that repeatedly display the right-eye image.

As described above, the n-number of subpixels repeatedly display the left-eye image in the first in-surface direction, and the n-number of subpixels adjacent to the left-eye image repetitively display the right-eye image in the first in-surface direction. Accordingly, an image pitch k between images adjacent to each other in the first in-surface direction is expressed by $2n \times Hp$. The image pitch k is expressed by $2 \times 4 \times Hp = 8 \times Hp$ in the example illustrated in FIG. 2.

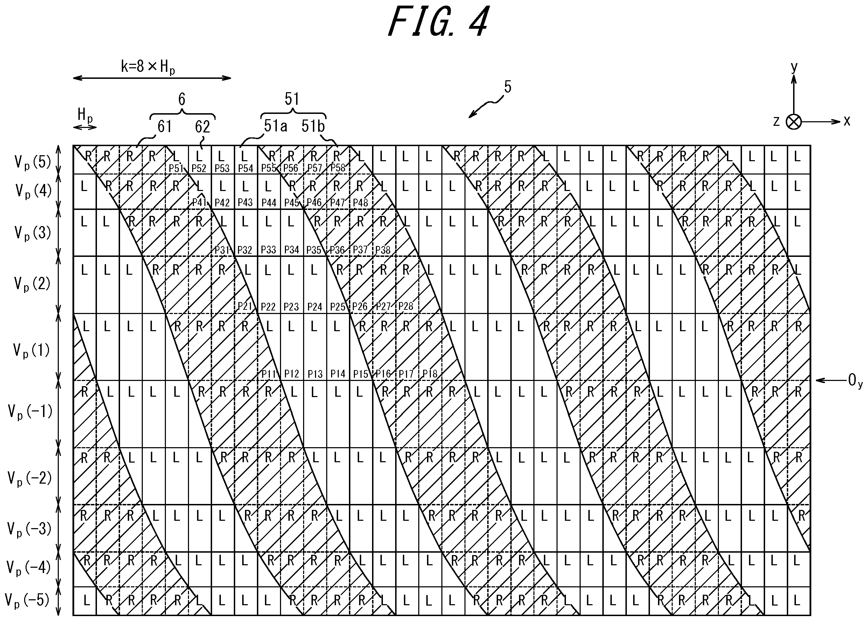

The display surface 51 and the parallax barrier 6 as described above are viewed as illustrated in FIG. 4 by the user's eyes located at the reference position $P_S$. The display surface 51 is inclined toward the user's side in the depth direction as located farther away from the vertical reference position $O_y$ in the vertical direction. Thus, when viewed by the user's eyes located at the reference position $P_s$, the farther the subpixel is located away from the vertical reference position $P_S$ in the vertical direction, the smaller the vertical component of the subpixel appears. In other words, the vertical component of the subpixel of the display panel 5 becomes shorter as it is located farther away from the vertical direction reference position $O_y$ in the vertical direction.

In the example illustrated in FIG. 4, when Vp (k) (k is an integer other than 0) represents the vertical length of the subpixel visible from the user's eyes, Vp (1) > Vp (2) > Vp (3) > ... is satisfied. Also, Vp (-1) > Vp (-2) > Vp (-3) > ... is satisfied.

The parallax barrier 6 is arranged to follow the display surface 51. Thus, the visible regions 51a of the left eye located at the reference position $P_S$ include all of the subpixels P12 to P14, P22 to P24, P32 to P34, P42 to P44, and P52 to P54 in the example illustrated in FIG. 4. Further, the visible regions 51a of the left eye located at the reference position $P_S$ include a portion of each of the subpixels P11, P15, P21, P25, P31, P35, P41, and P45. At this time, the controller 7 causes to display the left-eye image in the subpixels P11 to P14, P21 to P24, P31 to P34, P41 to P44, and P51 to P54. Also, the controller 7 causes to display the right-eye image in the subpixels P15 to P18, P25 to P28, P35 to P38, P45 to P48, and P55 to P58. Thus, the majority of the image viewed by the user's left eye is the left-eye image. Similarly, the majority of the image viewed by the user's right eye is the right-eye image. Thus, occurrence of crosstalk is minimized. Although an aperture ratio of the parallax barrier 6 is 50% in the example illustrated in FIG. 4, the aperture ratio may be appropriately designed in view of balancing between a light amount and occurrence of crosstalk. For example, when the aperture ratio of the parallax barrier 6 is 25%, occurrence of crosstalk may be prevented.

Here, a manner in which the controller 7 is configured to change an image displayed by each subpixel in accordance with vertical displacement of an eye detected by the detection apparatus 2 will be described. In the following description, a case in which the controller 7 is configured to change an image based on the displacement of the left eye from the reference position Ps will be described. Note that the controller 7 performs in a similar manner so as to change an image based on displacement of the right eye from the reference position $P_S$.

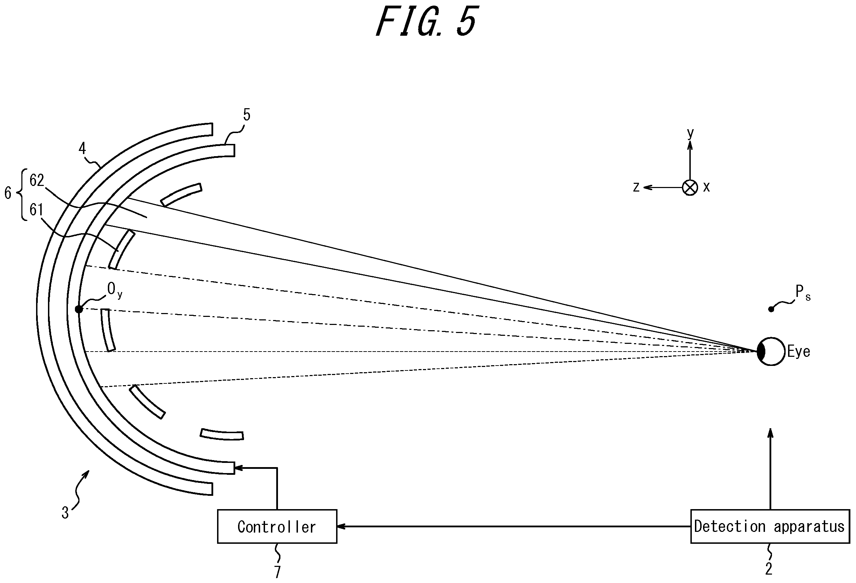

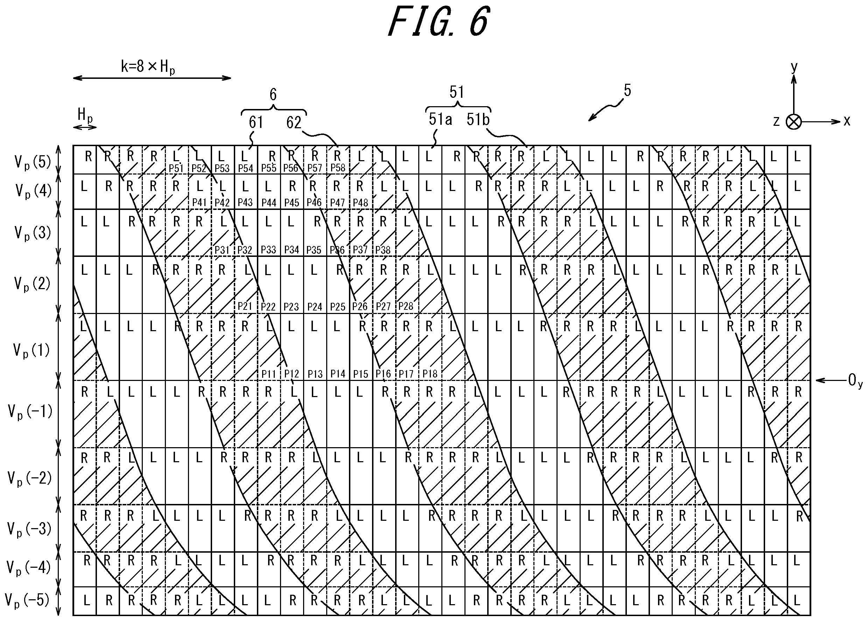

When the user's eyes are displaced in the vertical direction from the reference position $P_S$ as illustrated in FIG. 5, the visible regions 51a of the left eye located at a displaced position are different from the visible regions 51a of the left eye located at the reference position $P_S$ of FIG. 4, as illustrated in FIG. 6. In particular, the portions of the subpixels P15, P22, and P35 included in the visible regions 51a of the left eye at the displaced position are larger than the portions of the subpixels P15, P25, and P35 included in the visible regions 51a of the left eye located at the reference position $P_S$. Also, the portions of the subpixels P16, P26, and P36 that are not included in the visible regions 51a of the left eye located at the reference position $P_S$ are included in the visible regions 51a of the left eye located at the displaced position. At the displaced position, thus, large portions of the subpixels P15, P25, and P35 respectively displaying the right-eye image and the portions of the subpixels P16, P26, and P36 are included in the visible regions 51a of the left eye. Accordingly, more crosstalk occurs for the left eye.

Thus, when the user's eyes are displaced in the vertical direction, the controller 7 is configured to change the image displayed by the subpixels P15, P25, and P35, for which more than half portions are included in the visible regions 51a of the left eye, to the left-eye image from the right-eye image. At this time, the portions of the subpixels P16, P26, and P36 included in the visible regions 51a are smaller than half of the respective subpixels P16, P26, and P36. Thus, the controller 7 does not change the image displayed by the subpixels P16, P26, and P36 and causes these subpixels to maintain the right-eye image.

At this time, the controller 7 is configured to change the image displayed by the subpixels P11, P 21, and P31 from the left-eye image to the right-eye image, for which the portions included in the visible regions 51a are reduced, that is, the greater portions thereof become visible to the right eye.

At a position further remote from the vertical standard position Oy, the visible regions 51a include portions of the subpixels P45 and P55 when the eyes are located at the reference position $P_S$. However, the subpixels P45 and P55 in their entirety are included in the visible regions 51a when the eyes are located in the displaced position. Thus, the controller 7 is configured to change the images displayed by the subpixels P45 and P55 to the left-eye image from the right-eye image. Further, although the subpixels P46 and P56 are not included in the visible regions 51a when the eye is located in the reference position $P_S$, more than a half portion of each of the subpixels P46 and P56 is included in the visible regions 51a when the eye is in the displaced position. Thus, the controller 7 also is configured to change the images displayed by the subpixels P46 and P56 to the left-eye image from the right-eye image.

In addition, the controller 7 is configured to change the images displayed by the subpixels P41 and P51 which are no longer included in the visible regions 51a, that is, which are now visible to the right eye, to the right-eye image from the left-eye image. Further, the controller 7 is configured to change the images displayed by the subpixels P42 and P52 for which the portions included in the visible regions 51a are reduced, that is, the greater portions thereof become visible to the right eye, to the right-eye image from the left-eye image.

As described above, the controller 7 is configured to change the images displayed by the subpixels based on the distance from the vertical direction reference position Oy. In particular, when the user's eyes move in the vertical direction from the reference position $P_S$, the controller 7 is configured to switch the image between the right-eye image and the left-eye image displayed by the number of subpixels corresponding to a vertical displacement amount of the eye out of the group of subpixels arranged in the horizontal direction. More subpixels that are located remote from the vertical reference position Oy of the display surface 51 need to change the displayed image than subpixels that are located near the vertical reference position Oy of the display surface 51. In other words, the farther a group of subpixels located remote from the vertical reference position Oy in the vertical direction, the narrower the intervals the controller 7 needs to change the displayed images. Because the controller 7 controls the imaged displayed by the subpixels as described above, the occurrence of crosstalk can be reduced in the three-dimensional display apparatus 3 having the display surface 51 formed as the curved surface.

Next, the manner in which the controller 7 is configured to change the images displayed by the subpixels based on a displacement of the eyes, detected by the detection apparatus 2, to approach the display surface 51 in the depth direction will be described.

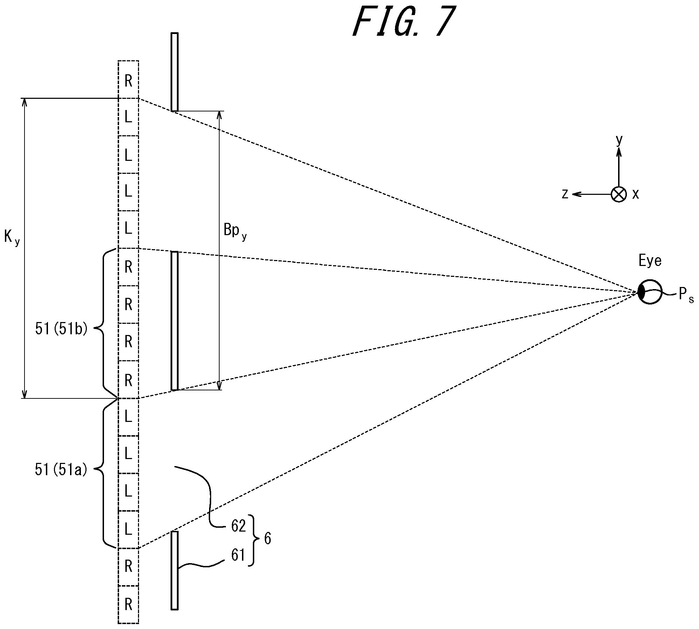

First, a preferred viewing distance dy in a case in which the display surface 51 is a flat surface rather than a curved surface will be described with reference to FIG. 7. The preferred viewing distance dy is a distance between the display surface 51 and the user's eye that minimizes crosstalk caused by a vertical arrangement of images. The preferred viewing distance dy is defined by Equation (1) described below, in which Bpy represents a vertical barrier pitch, ky represents a vertical image pitch, and g represents a distance between the display surface 51 and the parallax barrier 6.

$$dy : Bpy = (dy + g) : ky \qquad \text{Equation (1)}$$

In the present embodiment, the display panel 5 is formed as a curved surface that has an arc shape in the yz plane as described above. The display panel 5 formed as the curved surface includes subpixels arranged in regions that are divided at equal intervals in the first in-surface direction and the second in-surface direction.

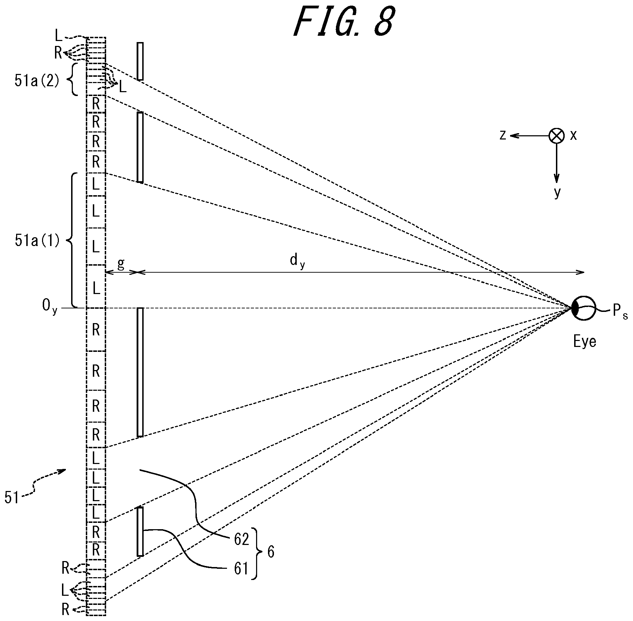

Thus, when the user's eyes are located at the reference position $P_S$ as illustrated in FIG. 8, in a case in which a viewing distance between the user's eyes and the vertical reference position Oy corresponds to the preferred viewing distance dy, each of the subpixels in the visible regions 51a(1) and 51a(2) of the left eye displays the left-eye image. In other words, the user's left eye views the left-eye image. Similarly, the user's right eye views the right-eye image. Thus, the user views a stereoscopic image in a state in which crosstalk is suppressed.

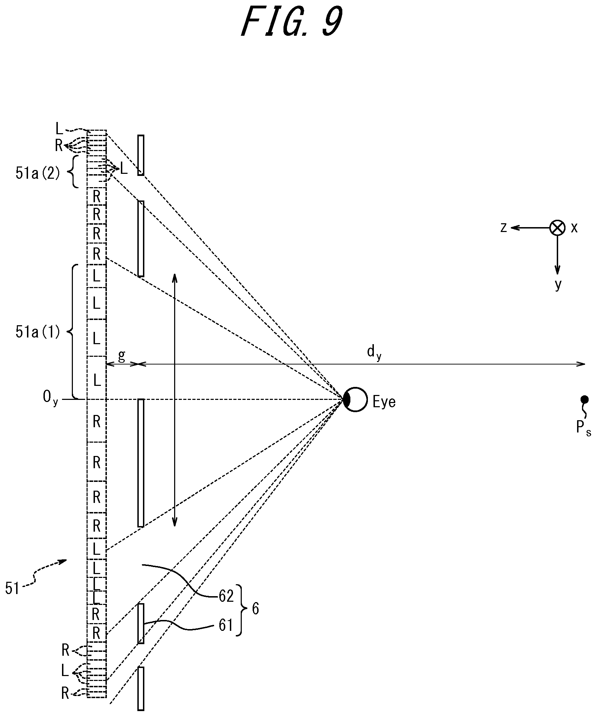

In this state, when the viewing distance becomes shorter than the preferred viewing distance dy as illustrated in FIG. 9, the visible region 51a(1) closest to the vertical reference position Oy includes four subpixels that display the left-eye image and one subpixel that display the right-eye image. When a portion of the right-eye image included in the visible region 51a(1) is smaller than the half of the entire right-eye image, the controller 7 causes the subpixels displaying the right-eye image to maintain the right-eye image. That is, the controller 7 does not change the image displayed by the subpixels. Also, when a portion of the right-eye image included in the visible region 51a(1) is equal to or more than half the entire right-eye image, the controller 7 causes one subpixel displaying the right-eye image to display the left-eye image.

Further, when the user's eyes are located at the displaced position in the depth direction, the visible region 51a(2) located remote from the vertical reference position Oy includes two subpixels that display the left-eye image and four subpixels that display the right-eye image. Thus, crosstalk that occurs in the user's eyes due to image light from the visible region 51a(2) located remote from the vertical standard position Oy is increased more than crosstalk occurs in the user's eyes due to image light from the visible region 51a(1). As such, the controller 7 causes the four subpixels that are included in the visible region 51a(2) and displaying the right-eye image to display the left-eye image. Also, the controller 7 causes the subpixels that are no longer included in the visible region 51a, i.e., the subpixels that became visible to the right eye to change their displays from the left-eye image to the right-eye image. This reduces the number of right-eye images viewed by the left eye and the number of left-eye images viewed by the right eye. Accordingly, crosstalk that occurs in the user's eyes is reduced.

As described above, when the user's eye moves in the depth direction approaching the display surface 51 from the reference position $P_S$, the controller 7 is configured to change the image displayed by 0 or 1 subpixel in the visible region 51a(1) located in the vicinity of the vertical reference position Oy. On the other hand, the controller 7 causes the four subpixels in the visible region 51a(2) located remote from the vertical direction standard position Oy to change the displayed image. That is, the controller 7 is configured to change the image displayed by the number of subpixels corresponding to the displacement amount of the eyes in the depth direction, out of the subpixels arranged in the vertical direction, between the right-eye image and the left-eye image. More subpixels located remote from the vertical standard position Oy need to change their displayed images than subpixels located in the vicinity of the vertical reference position Oy on the display surface 51. In other words, the farther away from the vertical reference position Oy the subpixel group is located, the narrower the intervals the controller 7 needs to change the displayed images in accordance with the displacement amount in the depth direction. By the controller 7 that controls the images displayed by the subpixels as described above, occurrence of crosstalk is suppressed in the three-dimensional display apparatus 3 that includes the display surface 51 having a curved shape.

Although a case in which an image is changed when a user's eye moves in the direction approaching the display surface 51 has been described in the above, the change of the image is performed in a similar manner in a case in which a user's eye moves in a direction away from the display surface 51. That is, on the display surface 51, the controller 7 needs to cause more subpixels that are located remote from the vertical reference position Oy to change the display than subpixels that are located in the vicinity of the vertical reference position Oy. Thus, the farther away from the vertical reference position Oy in the vertical direction a subpixel group is located, the smaller the displacement amount of the eye in the depth direction in response to which the controller 7 needs to change the displayed image.

Although the above embodiments has been described as a representative example, it will be apparent to those skilled in the art that various modifications and substitutions can be made within the spirit and scope of the present disclosure. Thus, the above embodiments should not be construed as limiting the present disclosure and may be varied or changed in a variety of manners without departing from the scope of the appended claims. For example, constituent blocks descried in the embodiments may be combined into one constituent block, or one constituent block may be subdivided into constituent blocks.

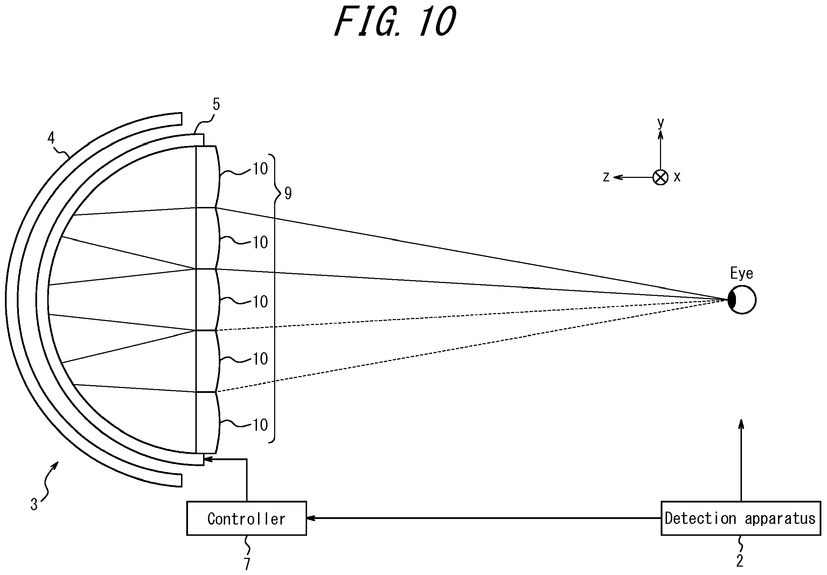

Although in the above embodiments the optical element is configured as the parallax barrier 6, this is not restrictive. For example, the optical element included in the three-dimensional display apparatus 3 may be configured as a lenticular lens 9. In this case, the lenticular lens 9 is formed by cylindrical lenses 10 arranged in the x-y plane as illustrated in FIG. 10. In a manner similar to the parallax barrier 6, the lenticular lens 9 is configured to transmit image light emitted by some subpixels in the visible regions 51a to a position of the user's left eye and image light emitted by other subpixels in the visible regions 51a to a position of the user's right eye.

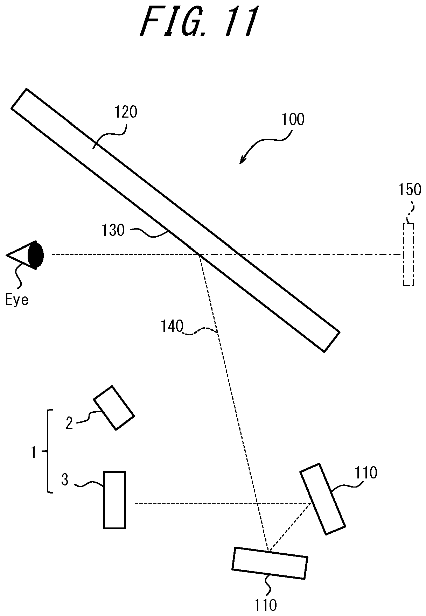

Further, the three-dimensional display system 1 may be mounted in a head-up display system 100 as illustrated in FIG. 11. The head-up display system 100 may be also referred to as a HUD (Head-Up Display) 100. The HUD 100 includes the three-dimensional display system 1, an optical member 110, and a projected member 120 that includes a projected plane 130. The HUD 100 is configured to transmit image light emitted from the three-dimensional display system 1 to the projected member 120 via the optical member 110. The HUD 100 is configured to cause image light reflected by the projected member 120 to reach the user's left and right eyes. That is, the HUD 100 is configured to cause image light from the three-dimensional display system 1 to proceed to the user's left and right eyes along an optical path 140, which is indicated by a broken line. The user can perceive image light reached along the optical path 140 as a virtual image 150. The three-dimensional display system 1 can provide a stereoscopic image by controlling the display in accordance with positions of the user's left and right eyes.

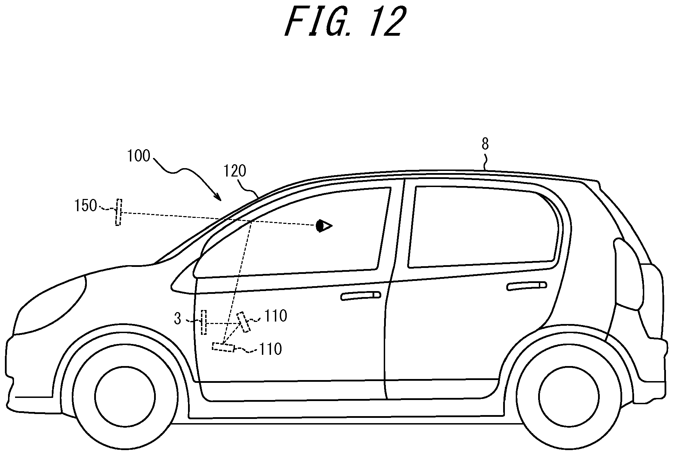

Also, the HUD 100 and the three-dimensional display system 1 may be mounted in a mobile body as illustrated in FIG. 12. Some constituent elements of each of the HUD 100 and the three-dimensional display system 1 may be shared by another apparatus or used as another constituent element of the mobile body. For example, the mobile body may use the windshield also as the projected member 120. When some constituent elements are shared by another apparatus or used as another constituent element of the mobile body, another configuration may be referred to as a HUD module or a three-dimensional display component. The three-dimensional display system 1 and the three-dimensional display apparatus 3 may be mounted in a mobile body. The term "mobile body" used herein may encompass, for example, vehicles, ships, and aircrafts. Vehicles may include automobiles and industrial vehicles. Vehicles are not limited thereto but may include rail vehicles, domestic vehicles, and fixed-wing aircrafts that travel on a runway. Automobiles may include, for example, cars, trucks, buses, motorcycles, and trolley buses. Automobiles are not limited thereto but may include other automobiles that travels on the road. Industrial vehicles may include, for example, agricultural vehicles and construction vehicles. Industrial vehicles may include, for example, forklifts and golf carts. Industrial vehicles for agricultural purpose may include, for example, tractors, tillers, transplanters, binders, combined harvesters, and lawn mowers. Industrial vehicles for construction purposes may include, for example, bulldozers, scrapers, excavators, crane trucks, dump trucks, and load rollers. The vehicles may include human-power vehicles traveling on human power. Classification of the vehicles is not limited to the above. For example, vehicles may include industrial vehicles authorized to travel on the road, and categories may include the same type of vehicle. Vessels may include, for example, watercrafts, boats, and tankers. Aircraft may include, for example, fixed wing aircraft and rotorcraft.

REFERENCE SIGNS LIST

| 1 | three-dimensional display system |
| 2 | detection apparatus |
| 3 | three-dimensional display apparatus |
| 4 | irradiator |
| 5 | display panel |
| 6 | parallax barrier |
| 7 | controller |
| 8 | mobile body |
| 9 | lenticular lens |
| 10 | cylindrical lens |
| 51 | display surface |
| 51a | visible region |
| 51b | invisible region |
| 60 | parallax barrier |
| 61 | shielding surface |
| 62 | transmitting region |
| 100 | head-up display system |
| 110 | optical member |
| 120 | projected member |
| 130 | projected plane |
| 140 | optical path |
| 150 | virtual image |

**Claims**

1. A three-dimensional display apparatus comprising:

   a display surface formed as a curved surface that does not have curvature in a first direction and has curvature in a plane orthogonal to the first direction, the display surface including a plurality of subpixels arranged in a grid pattern along the first direction and a direction in the display surface that is orthogonal to the first direction,

an optical element that is arranged to follow the curved surface and defines a beam direction of image light emitted by each of the plurality of subpixels for each of a plurality of strip-shaped regions extending in a certain direction in a surface following the curved surface; and

a controller configured to acquire a position of a user's eye and change an image displayed by each of the plurality of subpixels based on the display surface, the optical element, and the position of the user's eye.

2. The three-dimensional display apparatus according to claim 1,

wherein, when a center position refers to an intersection between the display surface and a perpendicular line drawn to the display surface from a reference position of the user's eye, and a second direction refers to a direction orthogonal to the first direction at the center position on the display surface, in a case in which the eye is displaced in the second direction from the reference position, the controller causes more subpixels that are arranged in the first direction and remote from the center position in the second direction to change displayed images than subpixels that include the center position and are arranged in the first direction.

3. The three-dimensional display apparatus according to claim 1,

wherein, where a center position refers to an intersection between a perpendicular line drawn from a reference position of the user's eye and the display surface, a second direction refers to a direction orthogonal to the first direction at the center position on the display surface, and a third direction refers to a direction along the perpendicular line, in a case in which the eye is displaced in the third direction from the reference position, the controller is configured to perform control such that a number of subpixels of the plurality of subpixels that are arranged in the second direction and remote from the center position in the second direction for which the image is changed is greater than a number of subpixels of the plurality of subpixels that include the center position and are arranged in the first direction for which the image is changed.

4. The three-dimensional display apparatus according to claim 2 or 3,

wherein the controller is configured to change the image with a center of the display surface in the second direction as the center position.

5. The three-dimensional display apparatus according to claim 2 or 3,

wherein the controller is configured to change the image with a position on the display surface opposing the center of the optical element in the second direction as the center position.

6. A three-dimensional display system comprising:

a detection apparatus configured to detect a position of a user's eye; and
a three-dimensional display apparatus that includes:

a display surface formed as a curved surface that does not have curvature in a first direction and has curvature in a plane orthogonal to the first direction, the display surface including a plurality of subpixels arranged in a grid pattern along the first direction and a direction in the display surface that is orthogonal to the first direction;

an optical element that is arranged to follow the curved surface and defines a beam direction of image light emitted from each of the plurality of subpixels for each of a plurality of strip-shaped regions extending in a certain direction in a surface following the curved surface; and

a controller configured to acquire the position of the user's eye and change an image displayed by each of the plurality of subpixels based on the display surface, the optical element, and the position of the user's eye.

7. A head-up display system comprising:
a three-dimensional display apparatus that includes:

a display surface formed as a curved surface that does not have curvature in a first direction and has curvature in a plane orthogonal to the first direction, the display surface including a plurality of subpixels arranged in a grid pattern along the first direction and a direction in the display surface that is orthogonal to the first direction;

an optical element that is arranged to follow the curved surface and defines a beam direction of image light emitted from each of the plurality of subpixels for each of a plurality of strip-shaped regions extending in a certain direction in a surface following the curved surface; and

a controller configured to acquire a position of a user's eye and change an image displayed by each of the plurality of subpixels based on the display surface, the optical element, and the position of the user's eye.

8. A mobile body comprising:
a three-dimensional display system that includes:

a detection apparatus configured to detect a position of a user's eye; and
a three-dimensional display apparatus that includes:

a display surface formed as a curved surface that does not have a curvature in a first direction and has curvature in a plane orthogonal to the first direction, the display surface including a plurality of subpixels arranged in a grid pattern along the first direction and a direction in the display surface that is orthogonal to the first direction;
an optical element that is arranged to follow the curved surface and defines a beam direction of image light emitted from each of the plurality of subpixels for each of a plurality of strip-shaped regions extending in a certain direction in a surface following the curved surface; and
a controller configured to acquire the position of the user's eye and change an image displayed by each of the plurality of subpixels based on the display surface, the optical element, and the position of the user's eye.

# FIG. 1

EP 3 617 774 A1

# FIG. 2

EP 3 617 774 A1

*FIG. 3*

*FIG. 4*

EP 3 617 774 A1

# FIG. 5

FIG. 6

EP 3 617 774 A1

# FIG. 7

# FIG. 8

# FIG. 9

## FIG. 10

## FIG. 11

FIG. 12

EP 3 617 774 A1

**EP 3 617 774 A1**

## INTERNATIONAL SEARCH REPORT

| International application No. |
| --- |
| PCT/JP2018/016860 |

A. CLASSIFICATION OF SUBJECT MATTER

Int.Cl.    G02B27/22(2006.01)i, G02B27/01(2006.01)i, G03B35/24(2006.01)i,
           G09F9/00(2006.01)i, H04N5/64(2006.01)i

According to International Patent Classification (IPC) or to both national classification and IPC

B. FIELDS SEARCHED

Minimum documentation searched (classification system followed by classification symbols)
Int.Cl. G02B27/22, G02B27/01, G03B35/24, G09F9/00, H04N5/64

Documentation searched other than minimum documentation to the extent that such documents are included in the fields searched
Published examined utility model applications of Japan       1922–1996
Published unexamined utility model applications of Japan     1971–2018
Registered utility model specifications of Japan             1996–2018
Published registered utility model applications of Japan     1994–2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2016/010234 A1 (SAMSUNG ELECTRONICS CO., LTD.) 21 January 2016, claims, paragraphs [0008]–[0146] (in particular, paragraphs [0008]–[0015], [0069], [0073]–[0077], [0141]), fig. 1–16 & JP 2017-529724 A & US 2016/0021367 A1 & EP 3158733 A1 & KR 10-2016-0010169 A & CN 105282539 A | 1, 6–8<br>2–5 |
| Y<br>A | JP 10-174127 A (SANYO ELECTRIC CO., LTD.) 26 June 1998, claims, paragraphs [0007]–[0056] (in particular, paragraphs [0055]–[0056]), fig. 1–15 (in particular, fig. 12–14) (Family: none) | 2–5<br>1, 6–8 |
| Y<br>A | JP 2017-38367 A (SAMSUNG ELECTRONICS CO., LTD.) 16 February 2017, claims, paragraphs [0004]–[0266], fig. 1–20 & EP 3128752 A1, all claims, paragraphs [0004]–[0265], and fig. 1–22 & KR 10-2017-0017587 A & CN 106454307 A | 2–5<br>1, 6–8 |
| A | JP 2016-177058 A (JAPAN DISPLAY INC.) 06 October 2016, claims, entire text, all drawings & US 2016/0274373 A1, all claims, paragraphs, and drawings | 1–8 |

☒ Further documents are listed in the continuation of Box C.          ☐ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| 23 July 2018 (23.07.2018) | 31 July 2018 (31.07.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

24

**INTERNATIONAL SEARCH REPORT**

International application No.

PCT/JP2018/016860

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-125428 A (JAPAN DISPLAY INC.) 06 July 2015, claims, entire text, all drawings & US 2015/0189261 A1, all claims, paragraphs, and drawings | 1-8 |
| A | JP 2007-256964 A (TOSHIBA CORP.) 04 October 2007, claims,  entire text, all drawings (Family: none) | 1-8 |
| A | JP 2010-529495 A (WISE VISION HOLDINGS LIMITED) 26 August 2010, claims, entire text, all drawings & US 2010/0220325 A1, all claims, paragraphs, and drawings & WO 2008/148378 A1 & EP 2156239 A1 & DE 112008002160 A & CN 101681025 A & AT 508388 T & TW 200913662 A | 1-8 |
| A | JP 2012-53345 A (SONY CORP.) 15 March 2012, claims, entire text, all drawings & US 2012/0057227 A1, all claims, paragraphs, and drawings & CN 102385164 A & KR 10-2012-0024460 A & TW 201226981 A | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017087699 A

- JP 2001166259 A